# FASCICULE DE BREVET EUROPEEN

(11) **EP 4 211 401 B1**
(45) Date de publication et mention de la délivrance du brevet: **01.05.2024**
(21) Numéro de dépôt: 21782779.9
(22) Date de dépôt: 07.09.2021
(51) Int. Cl.: F24D 3/16, F24F 5/00, F24F 13/22, E04B 9/30, E04B 9/02, E04B 9/04, E04B 9/22

(54) **DISPOSITIF RAYONNANT À CONDENSATION**
BRENNWERTSTRAHLER
CONDENSING RADIANT DEVICE

(30) Priorité: 08.09.2020 FR 2009097
(43) Date de publication de la demande: 19.07.2023
(73) Titulaire: Scherrer, Jean-Marc, 68400 Riedisheim (FR); Lang, Damien, 67100 Strasbourg (FR)
(72) Inventeur: Scherrer, Jean-Marc, 68400 Riedisheim (FR); Lang, Damien, 67100 Strasbourg (FR)
(74) Mandataire: IP Trust
(86) Numéro de dépôt international: PCT/FR2021/051531
(87) Numéro de publication internationale: WO 2022/053757

(56) Documents cités:
- WO-A1-01/20091
- WO-A1-91/13294
- WO-A1-97/17576
- WO-A1-2018/007856
- WO-A2-2020/008146
- FR-A1- 2 624 263
- FR-A1- 2 633 380

## Description

### Domaine de l'invention

La présente invention concerne un système et un dispositif rayonnant à condensation pour le chauffage, le refroidissement et la déshumidification de bâtiments par rayonnement thermique, la puissance thermique est développée à la fois en sensible (sèche) et en latent (humide).

### Discussion de l'état de la technique

On connait les systèmes de chauffage / climatisation par air pulsé se présentant sous la forme de ventilo-convecteurs ou centrales de traitement d'air connectés à des grilles de diffusion, cassettes plafonnières, unités murales, etc...

Utilisant un échangeur thermique capable de travailler en puissance sensible (sèche) et latente (humide), ces dispositifs autorisent en mode refroidissement une condensation de l'air traité permettant de déshumidifier l'air mais également d'atteindre des puissances de refroidissement importantes.

Toutefois ces procédés utilisent un soufflage d'air, donc un phénomène de convection, pour transmettre 100% de la puissance thermique. Ils nécessitent de ce fait des débits d'air (et donc des vitesses d'air) importants ainsi qu'une température d'air soufflé assez éloignée de la température ambiante intérieure du local ce qui génère la plupart du temps des inconforts thermiques au sein du local à traiter.

D'autres procédés connus comme les panneaux rayonnants, utilisent non pas la convection mais le rayonnement thermique pour diffuser 100% de la puissance utile. Ces dispositifs sont connus pour générer un très bon confort thermique caractérisé par une absence de courant d'air et une bonne homogénéité des températures intérieures. Par ailleurs ils n'utilisent pas l'air ambiant pour véhiculer la puissance thermique mais des ondes électromagnétiques qui se déplacent en ligne droite et viennent chauffer (ou refroidir) les occupants ainsi que les solides présents dans le volume traité comme par exemple un local. Cette spécificité leur confère une très bonne réactivité et permet, à température ressentie équivalente, de réaliser des économies de consommation comparativement aux systèmes à air pulsé.

Toutefois, ces procédés n'utilisant que le rayonnement thermique comme vecteur de diffusion sont dotés d'une puissance de refroidissement très limitée de par le risque d'atteinte du point de rosée en surface du panneau et donc le risque de formation de condensation. En effet et contrairement aux systèmes par air pulsé, les panneaux rayonnants ne peuvent être dotés d'un bac de recueil des condensas car celui-ci ferait barrière au rayonnement thermique.

On connait également les poutres froides, ce procédé utilise un échangeur thermique qui, en contact avec l'air ambiant génère une induction et donc un flux d'air convectif. Les faibles vitesses du flux d'air induit permettent à ce procédé de bénéficier d'une performance satisfaisante mais uniquement en mode refroidissement.

WO 01/20091 A1 (KLUTH MANFRED [DE]) décrit un système de plafond suspendu comprenant une pluralité d'éléments de plafond (2) qui sont essentiellement disposés à un niveau horizontal et des moyens (3) pour fixer l'élément de plafond (2) à un plafond d'étage ou à un mur. Le but de cette invention est de réaliser facilement et d'adapter individuellement des éléments de plafond (2) à la pièce, de simplifier le montage et de mieux éclairer la pièce. A cet effet, les éléments de plafond (2) sont pourvus d'un cadre fermé (6). La périphérie dudit cadre est orientée vers l'extérieur et est recouverte d'un film tendu (7) au moins partiellement perméable à la lumière. Dans un mode de réalisation préféré, les éléments de plafond (2) sont configurés de manière carrée ou éventuellement rectangulaire de telle sorte que la pièce à éclairer puisse être pourvue d'éléments de plafond (2) de mêmes dimensions.

WO 2020/008146 A2 (SCHERRER JEAN MARC [FR]; LANG DAMIEN [FR]) décrit un système d'accrochage (1) pour un faux plafond tendu, comprenant un profilé de fixation (2) apte à être fixé à un mur et présentant au moins une ouverture d'aération, un rail (4) agencé pour accrocher au moins une pièce de tissu tendue et apte à être solidement montée sur le profilé de fixation (2), et des moyens de blocage pour maintenir le rail (4) en position sur le profilé de fixation (2) lorsque le rail est monté sur le profilé, ledit système d'accrochage étant caractérisé en ce que le profilé de fixation (2) et le rail (4) présentent respectivement, en saillie du mur, des moyens d'accouplement réciproque permettant d'assembler le rail (4) et le profilé de fixation (2) par insertion des moyens dans entre eux, et en ce que les moyens de blocage comportent au moins un élément formant traverse (9) qui est disposé entre le profilé de fixation et le rail.

WO 2018/007856 A1 (KVADRAT SOFT CELLS AS [DK]) décrit un panneau (1) qui comprend un cadre (4) avec un tissu (5) extensible sur un côté inférieur (6) de celui-ci. Un bord (8) du tissu (5) est fixé à un côté périphérique (9) du cadre au moyen d'un certain nombre de pattes de fixation (11) réparties le long du bord du tissu. Tout d'abord, chaque support de fixation est fixé sur le côté périphérique à une première position inférieure (15) dans laquelle le tissu est suspendu de manière lâche sous le cadre en accrochant un élément en forme de crochet (13) des supports de fixation sur une première saillie inférieure (17 ) fourni au périphérique. Deuxièmement, chaque équerre de fixation est repositionnée de ladite première position inférieure à une deuxième position supérieure (16) dans laquelle le tissu est tendu sur la face inférieure du cadre en accrochant l'élément en forme de crochet des équerres de fixation sur une deuxième saillie supérieure (18) prévu sur le côté périphérique du cadre.

FR 2 633 380 A1 (SCHERRER FERNAND [FR]; ROUSSET JOSEPH [FR]) concerne un dispositif de climatisation de locaux comprenant un élément plat d'échange d'énergie thermique par rayonnement. Ce dispositif est caractérisé en ce que l'élément échangeur (3) est constitué d'un panneau mince (6), d'une épaisseur de l'ordre du millimètre, traversé de part en part par des canaux intérieurs parallèles (11) juxtaposés, jointifs ou non, de faible section (de type capillaire), dont les parois minces étanches sont réalisées en un matériau à faible densité, et par deux tuyaux (13) formant respectivement le collecteur et distributeur de fluide, parallèles et adjacents aux deux extrémités du panneau (6) où les extrémités ouvertes des canaux internes juxtaposés de celui-ci sont situés.

FR 2 624 263 A1 (SCHERRER FERNAND [FR]; ROUSSET JOSEPH [FR]) concerne un dispositif de chauffage d'une pièce d'un bâtiment par rayonnement infrarouge à basse température. Ce dispositif est caractérisé en ce qu'il comporte, entre l'élément (5) émettant le rayonnement infrarouge basse température et la paroi (2), un élément (4) réfléchissant le rayonnement infrarouge basse température vers l'intérieur du local et, du côté intérieur de ce local, une feuille (6) tendue en travers de la pièce, réalisée en un matériau se comportant de manière diathermique au rayonnement infrarouge basse température de l'élément (5) émettant le rayonnement infrarouge basse température, l'élément (4) réfléchissant ce rayonnement et la feuille (6) étant fixée le long leurs bords aux murs de la pièce.

WO 91/13294 A1 (KOESTER HELMUT [DE]) décrit un dispositif de chauffage et de refroidissement permettant d'éviter l'apparition d'eau de sueur sur des sites particuliers. A cette fin, un support (5, 6, 63, 80, 95, 120, 403-406) est prévu dans lequel est disposé un système de conduites ou de tubes (4, 8, 161, 162, 194) qui transporte un système de chauffage ou de refroidissement fluide. La température du fluide de refroidissement est transmise au support (5, 6, 63, 80, 95, 120, 403-406) et rayonnée dans la pièce. Sous le support (5, 6, 63, 80, 95, 120, 403-406) se trouve un canal d'eau de sueur (32, 46, 71, 81, 101, 102, 123, 187, 199) relié mécaniquement à ce support (5, 6, 63, 80, 95, 120, 403-406). Afin d'obtenir une séparation thermique entre le support (5, 6, 63, 80, 95, 120, 403-406) et le canal (32, 46, 71, 81, 101, 102, 123, 187, 199) une résistance thermique (2, 3, 42, 43, 75, 87, 100, 90, 126-133, 155, 171, 181) avec une valeur d'isolation thermique donnée est prévu entre les deux ou le canal (32, 46, 71, 81, 101, 102, 123, 187, 199) est disposée de manière à avoir sur sa face inférieure un isolant thermique

WO 97/17576 A1 (BARCOL AIR [CH]; SOKOLEAN HELMUT [CH]; ROSCHMANN KLAUS [CH]) décrit qu'afin de refroidir un espace (1), un élément de refroidissement (3) installé dans la zone du plafond est refroidi au-dessous du point de congélation, de préférence à environ -40 °C, pendant les phases de refroidissement de sorte que le condensat qui s'y forme gèle immédiatement. Pendant les phases de régénération lorsque l'espace (1) n'est pas utilisé, l'élément de refroidissement (3) est dégivré et les condensats sont captés dans un bac à condensats (7) sous l'élément de refroidissement (3) et évacués par un écoulement (8 ). La grande différence de température permet également d'obtenir un fort effet de refroidissement avec un petit élément de refroidissement (3), notamment par échange de rayonnement indirect entre l'espace (1) et l'élément de refroidissement (3) via un faux plafond (9). De plus, l'air dans l'espace est déshumidifié puisque de la vapeur d'eau est déposée et liée à l'élément de refroidissement (3) sous forme de glace.

On connait enfin le dispositif Barrisol Clim^{®} décrit dans le document WO 2018/037184 A1 (Jean- Marc SCHERRER [FR] ; Damien LANG [FR]). Ce dispositif, à l'inverse des procédés précédemment cités, utilise à la fois la convection et le rayonnement pour diffuser la puissance thermique. Très confortable en mode chauffage comme en mode refroidissement grâce à sa diffusion d'air pariétale (le long des parois du local à traiter) il évite les phénomènes de courant d'air et permet de bénéficier d'une très bonne homogénéité des températures au sein du volume d'occupation du local. Il nécessite toutefois d'être installé sur l'ensemble de la surface du plafond du local desservi autorisant ainsi peu de flexibilité dans des bâtiments où les locaux peuvent être amenés à être redéfinis régulièrement via des changements de cloisonnement comme, par exemple, les plateaux de bureaux.

### Brève description de l'invention

La présente invention se propose de palier à l'inconvénient majeur des panneaux rayonnants à savoir l'impossibilité de condenser en proposant un système rayonnant à condensation permettant d'accueillir tout type de panneau rayonnant et de recueillir les condensas générés par ces derniers sans faire obstacle à leur rayonnement thermique.

Un but particulier de l'invention est de proposer un système rayonnant à condensation et un dispositif par rayonnement à condensation permettant de chauffer ou refroidir le local à traiter avec une très grande efficacité et un excellent confort thermique mais aussi via de fortes puissances thermiques de refroidissement admissibles découlant d'une possibilité pour le système d'atteindre le point de rosée et donc de condenser. Ainsi composée l'invention permet d'être alimentée en eau glacée à des régimes de températures beaucoup plus faibles que ceux des panneaux rayonnants connus, la puissance thermique de refroidissement est ainsi très sensiblement augmentée. L'invention permet par ailleurs la déshumidification de l'air ambiant, particulièrement utile au confort thermique en mode refroidissement.

L'invention se présente sous la forme d'un cadre périphérique abritant un panneau rayonnant à condensation pouvant être suspendu au plafond d'un local à traiter, ledit cadre périphérique comprenant :
au moins une ligne d'accroche d'une toile tendue ou de tout autre matériau transparent au rayonnement thermique située dans la partie opposée au plafond ;
au moins une toile tendue ou tout autre matériau transparent au rayonnement thermique, arrimée à ladite au moins une ligne d'accroche du cadre périphérique, visible depuis le local et formant la face inférieure horizontale du cadre périphérique,
une bonde de recueil des condensas, ou tout autre dispositif permettant le recueil de condensas, fixée à ladite au moins une toile tendue ; idéalement ladite au moins une toile tendue subit une ou plusieurs pentes, soit via la forme du cadre périphérique, soit via une inclinaison de ce dernier soit via la bonde appliquant une pression en direction du local;
un jeu de pièce d'accroche permettant d'insérer un panneau rayonnant dans le cadre périphérique.

En particulier, il est proposé un système rayonnant à condensation comprenant un panneau rayonnant pour le chauffage et/ou de refroidissement et la déshumidification d'un local de bâtiment, ledit système rayonnant à condensation une fois fixé ou suspendu au plafond dudit local comprend :
un cadre périphérique doté d'au moins une ligne d'accroche d'une toile tendue située dans la partie opposée au plafond ;
ledit panneau rayonnant fixé audit cadre périphérique,
au moins une toile tendue étanche, transparente au rayonnement thermique et dotée d'un percement ou de tout autre moyen d'évacuation de l'eau pouvant s'y accumuler, ladite au moins une toile tendue étant visible depuis le local et formant la face inférieure horizontale dudit système rayonnant;
un moyen de recueil des condensas comme une bonde de recueil des condensas solidaire de façon étanche à ladite au moins une toile tendue et traversant cette dernière via ledit percement ;
un support de fixation, par exemple un support percé dont le percement permet d'accueillir ladite bonde de recueil des condensas, ledit support percé étant fixé à un des côtés dudit cadre périphérique et configuré de manière à tirer la bonde de recueil des condensas vers le bas du local en direction opposée au plafond et imposant ainsi une pente négative de ladite au moins une toile tendue de la périphérie du cadre vers la bonde de recueil des condensas.

Ainsi composée, cette solution présente notamment l'avantage de pouvoir accueillir tout type de panneau rayonnant et d'autoriser le panneau rayonnant à condenser via un recueil par la toile tendue étanche des condensas. Les condensas sont ensuite évacués par la bonde vers un réseau d'évacuation d'eau standard.

De par sa composition et sa faible épaisseur, la toile tendue présente une particularité thermique à savoir une transparence au rayonnement thermique. Le rayonnement thermique généré par le panneau n'est donc pas bloqué par la toile faisant office de bac de recueil des condensas.

Un autre objet de l'invention concerne un dispositif de chauffage et/ou de refroidissement et de déshumidification d'un local de bâtiment par rayonnement à condensation, ledit dispositif une fois fixé ou suspendu au plafond dudit local comprenant :
un cadre périphérique doté d'au moins une ligne d'accroche d'une toile tendue (2) située dans la partie opposée au plafond ;
un panneau rayonnant ainsi qu'un jeu de pièce d'accroche permettant d'insérer ledit panneau rayonnant dans le cadre périphérique ;
au moins une toile tendue étanche, transparente au rayonnement thermique et dotée d'un percement ou de tout autre moyen d'évacuation de l'eau pouvant s'y accumuler, ladite au moins une toile tendue étant visible depuis le local et formant la face inférieure horizontale dudit dispositif;
un moyen de recueil des condensas comme une bonde de recueil des condensas solidaire de façon étanche à ladite au moins une toile tendue et traversant cette dernière via ledit percement ;
un support de fixation, par exemple un support percé dont le percement permet d'accueillir ladite bonde de recueil des condensas, ledit support percé étant fixé à un des côtés dudit cadre périphérique et configuré de manière à tirer la bonde de recueil des condensas vers le bas du local en direction opposée au plafond et imposant ainsi une pente négative de ladite au moins une toile tendue de la périphérie du cadre vers la bonde de recueil des condensas.

L'invention se propose également de fournir un dispositif modulaire de chauffage et/ou de refroidissement et de déshumidification d'un local de bâtiment par rayonnement à condensation, comprenant l'association d'au moins deux dispositifs de chauffage et/ou de refroidissement et de déshumidification selon l'invention.

La présente invention offre notamment l'avantage d'utiliser la toile transparente aux rayonnements non seulement pour sa fonction esthétique mais aussi pour diriger les condensas vers l'évacuation de façon à ce que des éléments supplémentaires, tels que les bacs à condensas, qui font barrière au rayonnement thermique, ne soient plus nécessaires.

D'autres avantages inattendus de la présente invention apparaîtront à la lecture de la description détaillée et des modes de réalisation de l'invention.

### Brève description des figures

Des exemples de mise en oeuvre de l'invention sont indiqués dans la description illustrée par les figures annexées dans lesquelles :
La fig. 1 illustre une perspective de l'invention dépourvue de panneau rayonnant ;
La fig. 2 illustre une perspective de l'invention dotée d'un panneau rayonnant ;
La fig. 3 illustre une coupe de détail longitudinale de l'invention dotée d'un panneau rayonnant ;
La fig. 4 illustre une coupe de détail transversale de l'invention dotée d'un panneau rayonnant.

### Description détaillée de l'invention

La présente invention concerne un système rayonnant à condensation pour le chauffage et/ou le refroidissement et la déshumidification d'un local de bâtiment en puissance sensible et latente.

Les panneaux rayonnants classiques du marché se doivent de ne jamais atteindre une température surfacique suffisamment faible qui générerait de la condensation.

Ainsi et en prenant l'exemple d'un local devant être climatisé à 26°C avec 50% d'humidité ambiante le point de rosée est de 14,8°C, il n'est donc pas possible d'injecter de l'eau dans ces panneaux rayonnants à une température inférieure à 14,8°C. C'est la raison pour laquelle on injecte classiquement de l'eau glacée à 16°C dans les panneaux du marché développant ainsi, et dans ces conditions, une puissance froide surfacique de l'ordre de 80 W/m2.

La plupart des groupes de production d'eau glacée sont capables de produire une eau à 7°C. Dans ces conditions la puissance surfacique d'un même panneau rayonnant, comme utilisé dans la présente invention, serait portée à environ 180W/m2 en présence d'un recueil des condensas par la toile tendue étanche et transparente au rayonnement comme décrit dans la présente invention.

Ainsi, l'augmentation de puissance autorisée par la mise en oeuvre de la présente invention est très sensible, ce qui représente un avantage surprenant de l'invention par rapport à l'art antérieur. Un autre avantage de la présente invention, consiste dans le fait que le recueil des condensas permet de déshumidifier l'air ambiant ce qui n'est pas le cas des panneaux rayonnants classiques.

Bien que des méthodes et des matériaux similaires ou équivalents à ceux décrits ici puissent être utilisés dans la pratique, des méthodes et des matériaux appropriés sont décrits ci-dessous. Cependant, les matériaux, les méthodes et les modes de réalisations décrits sont uniquement illustratifs et ne sont pas destinés à être limitatifs.

En cas de conflit, la présente description, y compris les définitions, prévaudra.

Sauf définition contraire, tous les termes techniques et scientifiques utilisés dans le présent document ont la même signification que celle généralement comprise par l'homme du métier auquel le sujet appartient. Telles qu'utilisées ici, les définitions suivantes sont fournies afin de faciliter la compréhension de la présente invention.

Le terme « comprendre ou comprend » est généralement utilisé dans le sens d'inclure, c'est-à-dire de permettre la présence d'une ou plusieurs caractéristiques ou composants.

Le terme « air traité » signifie un air refroidi ou réchauffé de sorte à assurer les besoins de refroidissement ou de chauffage d'un local.

En règle générale, il est entendu par « air froid » une température allant jusqu'à 20°C et « air chaud » toute température située au-delà de 20°C.

Le « point de rosée » ou température de rosée est la température sous laquelle de la rosée se dépose naturellement. En dessous de cette température qui dépend de la pression et l'humidité ambiantes, la vapeur d'eau contenue dans l'air se condense sur les surfaces, par effet de saturation. Le point de rosée est une donnée déterminante dans l'isolation thermique d'un bâtiment qui permettra de savoir s'il y a un risque que l'humidité ambiante d'une pièce se condense en traversant les couches successives d'un mur extérieur, dans lequel chaque couche affiche un gradient de température particulier, dégressif vers l'extérieur. Le cas échéant, l'humidité qui se condense peut provoquer la détérioration de la couche dans laquelle le phénomène se produit.

Par « percement » ou tout autre moyen d'évacuation de l'eau, on entend tout orifice de forme circulaire ou autre, idéalement présent sur la toile tendue mais pouvant être également installé sur le cadre périphérique et permettant l'évacuation par voie gravitaire d'une éventuelle accumulation de condensas sous forme liquide sur ladite toile tendue.

Par « bonde d'évacuation » on entend, tout moyen de recueil des condensas de forme circulaire ou autre solidaire dudit percement (tel que définit plus haut) et susceptible de recueillir les condensas dans l'optique de les faire circuler vers un réseau d'évacuation d'eau ou de liquide.

Par « support percé » ou support de fixation percé, on entend tout élément de fixation permettant d'imposer une ou plusieurs pentes à la toile tendue via une fixation permettant d'exercer une poussée de ladite bonde d'évacuation (telle que définie plus haut) en direction du sol du local à traiter.

En particulier, il est proposé un système rayonnant à condensation comprenant un panneau rayonnant (4) pour le chauffage et/ou de refroidissement et la déshumidification d'un local de bâtiment, ledit système rayonnant à condensation une fois fixé ou suspendu au plafond dudit local comprend :
un cadre périphérique (1) doté d'au moins une ligne d'accroche d'une toile tendue (2) située dans la partie opposée au plafond ;
ledit panneau rayonnant (4) fixé audit cadre périphérique (1);
au moins une toile tendue étanche (2), transparente au rayonnement thermique et dotée d'un percement ou de tout autre moyen d'évacuation de l'eau pouvant s'y accumuler, ladite au moins une toile tendue étanche (2) étant visible depuis le local et formant la face inférieure horizontale dudit système rayonnant;
un moyen de recueil des condensas comme une bonde de recueil des condensas (3) solidaire de façon étanche à ladite au moins une toile tendue (2) et traversant cette dernière via ledit percement ;
un support de fixation, par exemple un support percé (7) dont le percement permet d'accueillir ladite bonde de recueil des condensas (3), ledit support percé (7) étant fixé à un des côtés dudit cadre périphérique (1) et configuré de manière à tirer la bonde de recueil des condensas (3) vers le bas du local en direction opposée au plafond et imposant ainsi une pente négative de ladite au moins une toile tendue étanche (2) de la périphérie du cadre (1) vers la bonde de recueil des condensas (3).

La toile tendue (2) est étanche aux liquides pour ne pas laisser passer les condensas d'eau. Elle permet par contre de laisser traverser le rayonnement thermique de par sa composition et sa faible épaisseur. Idéalement la toile tendue (2) est une toile PVC d'épaisseur comprise entre 0,1mm et 5mm.

De préférence, le système rayonnant à condensation comporte en outre un jeu de pièce d'accroche (5) fixé au cadre périphérique (1) et permettant d'insérer ledit panneau rayonnant (4) à l'intérieur dudit cadre périphérique (1).

Le système rayonnant à condensation est fixé ou suspendu au plafond par l'intermédiaire de suspentes d'accroche (6) ou tout moyen équivalent d'accroche connu de l'homme du métier.

De préférence, la bonde de recueil des condensas (3) est reliée à un réseau d'évacuation d'eau (8) permettant le transfert des condensas vers ce dernier.

Le fait de relier le recueil des condensas (3) vers un réseau d'évacuation d'eau (8) est connu de l'homme du métier puisque ceci est nécessaire à toutes les unités de climatisation travaillant en puissance sensible (sèche) et latente (humide) comme les cassettes plafonnières de climatisation, les unités murales, les ventilos convecteurs, etc...

Selon un mode de réalisation particulier de l'invention, le système rayonnant à condensation comporte en outre une seconde toile tendue disposée à l'extrémité de la face inférieure horizontale dudit système rayonnant à condensation et directement visible depuis le local. Cette seconde toile tendue est arrimée à une seconde ligne d'accroche du cadre périphérique (1) située en contrebas de ladite au moins une ligne d'accroche portant la toile tendue étanche (2), et est visible depuis le local. Cette seconde toile tendue a pour avantage d'améliorer l'esthétique du système rayonnant à condensation selon l'invention, par ailleurs dans certains modes de réalisations particuliers elle permet également le traitement acoustique du local ou l'éclairement du local (caisson lumineux).

Avantageusement, cette seconde toile tendue est translucide à la lumière.

Selon un mode de réalisation, ladite seconde toile tendue à une épaisseur maximale de 5mm. De préférence, l'épaisseur de cette seconde toile est inférieure à 2 mm et idéalement inférieure à 1 mm.

Selon un mode particulier de réalisation, le système rayonnant à condensation est en outre doté d'au moins une source lumineuse fixée, par exemple, à l'intérieur du cadre périphérique (1) entre ladite au moins une toile tendue étanche (2) et ladite seconde toile tendue autorisant l'éclairement du local, la lumière générée par la source lumineuse étant répartie sur ladite seconde toile tendue située en contrebas de la source lumineuse et visible depuis le local.

Selon un autre mode de réalisation, ladite seconde toile tendue est micro perforée, permettant le traitement acoustique du local.

Un autre objet de l'invention concerne un dispositif de chauffage et/ou de refroidissement et de déshumidification d'un local de bâtiment par rayonnement à condensation, ledit dispositif une fois fixé au plafond ou suspendu au plafond dudit local comprenant :
un cadre périphérique (1) doté d'au moins une ligne d'accroche d'une toile tendue (2) située dans la partie opposée au plafond ;
un panneau rayonnant (4) ainsi qu'un jeu de pièce d'accroche (5) permettant d'insérer ledit panneau rayonnant (4) dans le cadre périphérique (1) ;
au moins une toile tendue étanche (2), transparente au rayonnement thermique et dotée d'un percement ou de tout autre moyen d'évacuation de l'eau pouvant s'y accumuler, ladite au moins une toile tendue étanche (2) étant visible depuis le local et formant la face inférieure horizontale dudit dispositif;
un moyen de recueil des condensas comme une bonde de recueil des condensas (3) solidaire de façon étanche à ladite au moins une toile tendue (2) et traversant cette dernière via ledit percement ;
un support de fixation, par exemple un support percé (7) dont le percement permet d'accueillir ladite bonde de recueil des condensas (3), ledit support percé (7) étant fixé à un des côtés dudit cadre périphérique (1) et configuré de manière à tirer la bonde de recueil des condensas (3) vers le bas du local en direction opposée au plafond et imposant ainsi une pente négative de ladite au moins une toile tendue étanche (2) de la périphérie du cadre (1) vers la bonde de recueil des condensas (3).

Avantageusement, ledit dispositif est fixé ou suspendu au plafond par l'intermédiaire de suspentes d'accroche (6).

De préférence, ladite bonde de recueil des condensas (3) est reliée à un réseau d'évacuation d'eau (8) permettant le transfert des condensas vers ce dernier. D'autres systèmes de recueil d'eau connus par l'homme du métier peuvent être envisagée.

Tout comme décrit plus haut, selon un mode de réalisation particulier de l'invention, le dispositif selon l'invention comporte en outre une seconde toile tendue disposée à l'extrémité de la face inférieure horizontale dudit dispositif et directement visible depuis le local.

Avantageusement, cette seconde toile tendue est translucide à la lumière.

Tout comme décrit plus haut, selon un mode particulier de réalisation, le dispositif est en outre doté d'au moins une source lumineuse fixée à l'intérieur du cadre périphérique (1) entre ladite au moins une toile tendue étanche (2) et ladite seconde toile tendue autorisant l'éclairement du local, la lumière générée par la source lumineuse étant répartie sur ladite seconde toile tendue située en contrebas de la source lumineuse et visible depuis le local.

Selon un autre mode de réalisation, ladite seconde toile tendue est micro perforée, permettant le traitement acoustique du local.

Il est également proposé un dispositif modulaire de chauffage et/ou de refroidissement et de déshumidification d'un local de bâtiment par rayonnement à condensation, ledit dispositif modulaire une fois fixé ou suspendu au plafond dudit local est caractérisé en ce que au moins deux dispositifs de chauffage et/ou de refroidissement et de déshumidification selon l'invention sont accolés l'un à l'autre, par l'intermédiaire d'un jeu de raccordement inter module disposé sur les côtés du cadre périphérique (1) de chaque dispositif de chauffage et/ou de refroidissement et de déshumidification.

Description des figures :

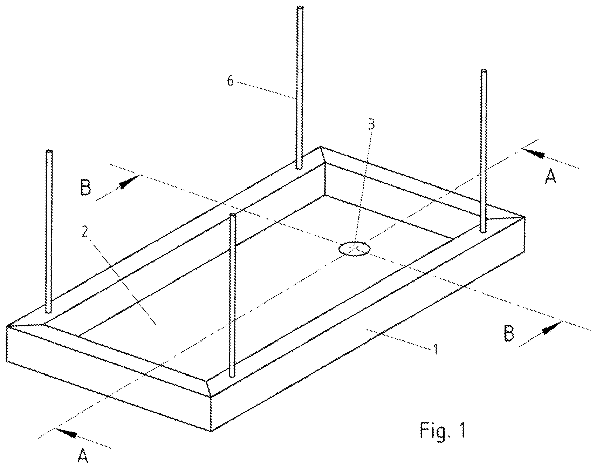

La figure 1 illustre une perspective du système rayonnant à condensation de l'invention dépourvue de panneau rayonnant (4). Le cadre périphérique (1) est fixé ou suspendu au plafond du local à traiter par l'intermédiaire de suspentes d'accroche (6). Au moins une toile tendue étanche (2) est visible depuis le local et forme la face inférieure horizontale dudit système rayonnant. A l'intersection des axes A et B se trouve un percement dans la toile tendue étanche (2) permettant de loger une bonde de recueil des condensas (3) solidaire de façon étanche à ladite au moins une toile tendue (2) et traversant cette dernière via ledit percement.

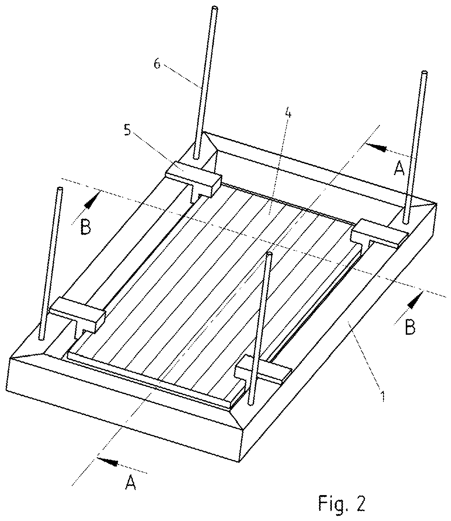

La figure 2 illustre une perspective du dispositif de chauffage et/ou de refroidissement et de déshumidification d'un local de bâtiment par rayonnement à condensation selon l'invention. Ledit dispositif est doté d'un panneau rayonnant (4), un jeu de pièce d'accroche (5) fixé au cadre périphérique (1) permet d'insérer le panneau rayonnant (4) à l'intérieur dudit cadre périphérique (1).

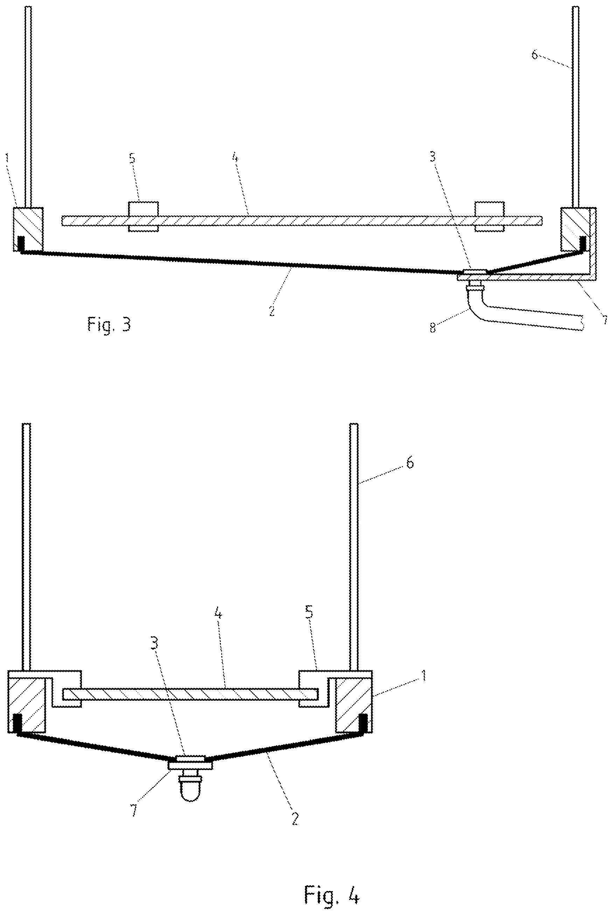

La figure 3 illustre une coupe de détail longitudinale du dispositif de chauffage et/ou de refroidissement et de déshumidification selon l'invention doté d'un panneau rayonnant (4). Un support percé (7) dont le percement permet d'accueillir ladite bonde de recueil des condensas (3) est fixé à un des côtés dudit cadre périphérique (1) et configuré de manière à tirer la bonde de recueil des condensas (3) vers le bas du local en direction opposée au plafond et imposant ainsi une pente négative de ladite au moins une toile tendue étanche (2) de la périphérie du cadre (1) vers la bonde de recueil des condensas (3) afin d'entraîner l'eau des condensas vers un réseau d'évacuation d'eau (8) permettant ainsi le transfert des condensas (liquides) vers l'extérieur du dispositif.
La figure 4 illustre une coupe de détail transversale du dispositif de chauffage et/ou de refroidissement et de déshumidification selon l'invention doté d'un panneau rayonnant. Cette figure représente en particulier, le cadre périphérique (1) doté d'une ligne d'accroche d'une toile tendue (2) située dans la partie opposée au plafond (également visible sur la figure 3).

Lors d'un fonctionnement en mode refroidissement de l'eau glacée est injectée dans le panneau rayonnant (4), à une certaine température limite de la surface du panneau rayonnant (4), ce dernier va générer de la condensation qui va tomber sur la surface de la toile tendue étanche (2) et s'écouler naturellement vers la bonde de recueil des condensas (3). La bonde de recueil des condensas (3) reliée à un réseau d'évacuation d'eau (8) permet le transfert des condensas vers ce dernier.

Selon un mode de réalisation préféré, le dispositif selon l'invention comporte en outre une seconde toile tendue disposée à l'extrémité de la face inférieure horizontale dudit dispositif et directement visible depuis le local (non représenté). Cette seconde toile va recouvrir la toile tendue étanche (2) ainsi que la bonde de recueil des condensas (3) reliée à un réseau d'évacuation d'eau (8) et de ce fait améliorer l'esthétique du dispositif selon l'invention.

Avantageusement le dispositif selon l'invention est en outre doté d'au moins une source lumineuse fixée à l'intérieur du cadre périphérique (1) entre ladite au moins une toile tendue étanche (2) et ladite seconde toile tendue autorisant l'éclairement du local, la lumière générée par la source lumineuse étant répartie sur ladite seconde toile tendue située en contrebas de la source lumineuse et visible depuis le local (non représenté).

Au moins deux dispositifs de chauffage et/ou de refroidissement et de déshumidification selon l'invention (non représenté) peuvent être avantageusement accolés l'un à l'autre, par l'intermédiaire d'un jeu de raccordement inter module disposé sur les côtés du cadre périphérique (1) pour constituer un dispositif modulaire de chauffage et/ou de refroidissement et de déshumidification d'un local de bâtiment par rayonnement à condensation.

### Numéros de références employées dans les figures :

- 1: cadre périphérique
- 2: toile tendue étanche
- 3: bonde de recueil des condensas
- 4: panneau rayonnant
- 5: jeu de pièce d'accroche (jeu de fixation)
- 6: suspente d'accroche
- 7: support percé
- 8: réseau d'évacuation d'eau

## Revendications

1. Système rayonnant à condensation comprenant un panneau rayonnant (4) pour le chauffage et/ou de refroidissement et la déshumidification d'un local de bâtiment, ledit système rayonnant à condensation une fois fixé ou suspendu au plafond dudit local comprend :
un cadre périphérique (1) doté d'au moins une ligne d'accroche d'une toile tendue (2) située dans la partie opposée au plafond ;
ledit panneau rayonnant (4) fixé audit cadre périphérique (1);
au moins une toile tendue étanche (2), transparente au rayonnement thermique et dotée d'un percement, ladite au moins une toile tendue étanche (2) étant visible depuis le local et formant la face inférieure horizontale dudit système rayonnant;
une bonde de recueil des condensas (3) solidaire de façon étanche à ladite au moins une toile tendue (2) et traversant cette dernière via ledit percement ;
un support percé (7) **caractérisé en ce que**, le percement permet d'accueillir ladite bonde de recueil des condensas (3), ledit support percé (7) étant fixé à un des côtés dudit cadre périphérique (1) et configuré de manière à tirer la bonde de recueil des condensas (3) vers le bas du local en direction opposée au plafond et
imposant ainsi une pente négative de ladite au moins une toile tendue étanche (2) de la périphérie du cadre (1) vers la bonde de recueil des condensas (3).

2. Le système rayonnant à condensation selon la revendication 1, **caractérisé en ce qu'**il comporte en outre un jeu de pièce d'accroche (5) fixé au cadre périphérique (1) et permettant d'insérer ledit panneau rayonnant (4) à l'intérieur dudit cadre périphérique (1).

3. Le système rayonnant à condensation selon les revendications 1 et 2, **caractérisé en ce que** ledit système rayonnant à condensation est fixé ou suspendu au plafond par l'intermédiaire de suspentes d'accroche (6).

4. Le système rayonnant à condensation selon l'une quelconque des revendications 1 à 3, **caractérisé en ce que** ladite bonde de recueil des condensas (3) est reliée à un réseau d'évacuation d'eau (8) permettant le transfert des condensas vers ce dernier.

5. Le système rayonnant à condensation selon l'une quelconque des revendications précédentes, **caractérisé en ce qu'**il comporte une seconde toile tendue disposée à l'extrémité de la face inférieure horizontale dudit système rayonnant à condensation et directement visible depuis le local.

6. Le système rayonnant à condensation selon la revendication 5, **caractérisé en ce que** ladite seconde toile tendue est translucide à la lumière.

7. Le système rayonnant à condensation selon les revendications 5 à 6, **caractérisé en ce que** ledit système rayonnant est en outre doté d'au moins une source lumineuse fixée à l'intérieur du cadre périphérique (1) entre ladite au moins une toile tendue étanche (2) et ladite seconde toile tendue autorisant l'éclairement du local, la lumière générée par la source lumineuse étant répartie sur ladite seconde toile tendue située en contrebas de la source lumineuse et visible depuis le local.

8. Le système rayonnant à condensation selon la revendication 5, **caractérisé en ce que** ladite seconde toile tendue est micro perforée, permettant le traitement acoustique du local.

9. Le système rayonnant à condensation selon les revendications 5, 6 ou 8, **caractérisé en ce que** ladite seconde toile tendue à une épaisseur maximale de 5mm.

10. Dispositif de chauffage et/ou de refroidissement et de déshumidification d'un local de bâtiment par rayonnement à condensation, ledit dispositif une fois fixé ou suspendu au plafond dudit local comprenant :
un cadre périphérique (1) doté d'au moins une ligne d'accroche d'une toile tendue (2) située dans la partie opposée au plafond ;
un panneau rayonnant (4) ainsi qu'un jeu de pièce d'accroche (5) permettant d'insérer ledit panneau rayonnant (4) dans le cadre périphérique (1) ;
au moins une toile tendue étanche (2), transparente au rayonnement thermique et dotée d'un percement, ladite au moins une toile tendue étanche (2) étant visible depuis le local et formant la face inférieure horizontale dudit système rayonnant; une bonde de recueil des condensas (3) solidaire de façon étanche à ladite au moins une toile tendue (2) et traversant cette dernière via ledit percement ;
un support percé (7) **caractérisé en ce que**, le percement permet d'accueillir ladite bonde de recueil des condensas (3) ledit support percé (7) étant fixé à un des côtés dudit cadre périphérique (1) et configuré de manière à tirer la bonde de recueil des condensas (3) vers le bas du local en direction opposée au plafond et imposant ainsi une pente négative de ladite au moins une toile tendue étanche (2) de la périphérie du cadre (1) vers la bonde de recueil des condensas (3).

11. Le dispositif de chauffage et/ou de refroidissement et de déshumidification selon la revendication 10, **caractérisé en ce que** ledit dispositif est fixé ou suspendu au plafond par l'intermédiaire de suspentes d'accroche (6).

12. Le dispositif de chauffage et/ou de refroidissement et de déshumidification selon les revendications 10 à 11, **caractérisé en ce que** ladite bonde de recueil des condensas (3) est reliée à un réseau d'évacuation d'eau (8) permettant le transfert des condensas vers ce dernier.

13. Dispositif modulaire de chauffage et/ou de refroidissement et de déshumidification d'un local de bâtiment par rayonnement à condensation, ledit dispositif modulaire une fois fixé ou suspendu au plafond dudit local est **caractérisé en ce que** au moins deux dispositifs de chauffage et/ou de refroidissement et de déshumidification selon l'une quelconque des revendications 10 à 12 sont accolés l'un à l'autre, par l'intermédiaire d'un jeu de raccordement inter module disposé sur les côtés du cadre périphérique (1) de chaque dispositif de chauffage et/ou de refroidissement et de déshumidification.

## Patentansprüche

1. Kondensationsstrahlungssystem, umfassend eine Strahlungsplatte (4) zum Heizen und/oder Kühlen und Entfeuchten eines Gebäuderaums, wobei das Kondensationsstrahlungssystem, wenn es einmal an der Decke des Raums fixiert oder aufgehängt ist, umfasst:
einen Umfangsrahmen (1), der mit mindestens einer Linie zum Befestigen eines gespannten Tuchs (2) ausgestattet ist, das sich in dem Teil befindet, der der Decke gegenüberliegt;
die Strahlungsplatte (4), die an dem Umfangsrahmen (1) fixiert ist;
mindestens ein dichtes gespanntes Tuch (2), das für die Wärmestrahlung durchlässig und mit einer Durchbohrung ausgestattet ist, wobei das mindestens eine dichte gespannte Tuch (2) von dem Raum aus sichtbar ist und die horizontale Unterfläche des Strahlungssystems ausbildet; einen Kondensatsammelabflussstopfen (3), der mit dem mindestens einen gespannten Tuch (2) auf dichte Weise fest verbunden ist und dieses letztere über die Durchbohrung durchquert;
einen durchbohrten Träger (7), **dadurch gekennzeichnet, dass** die Durchbohrung es ermöglicht, den Kondensatsammelabflussstopfen (3) aufzunehmen, wobei der durchbohrte Träger (7) an einer der Seiten des Umfangsrahmens (1) fixiert und so konfiguriert ist, dass er den Kondensatsammelabflussstopfen (3) in einer Richtung gegenüberliegend der Decke zu dem Boden des Raums zieht und so eine negative Steigung des mindestens einen dichten gespannten Tuchs (2) von dem Umfang des Rahmens (1) zu dem Kondensatsammelabflussstopfen (3) hin erzwingt.

2. Kondensationsstrahlungssystem nach Anspruch 1,
**dadurch gekennzeichnet, dass** es ferner einen Befestigungsstücksatz (5) umfasst, der an dem Umfangsrahmen (1) fixiert ist und es ermöglicht, die Strahlungsplatte (4) in das Innere des Umfangsrahmens (1) einzuführen.

3. Kondensationsstrahlungssystem nach Anspruch 1 und 2,
**dadurch gekennzeichnet, dass** das Kondensationsstrahlungssystem über Befestigungsaufhänger (6) an der Decke fixiert oder aufgehängt wird.

4. Kondensationsstrahlungssystem nach einem der Ansprüche 1 bis 3, **dadurch gekennzeichnet, dass** der Kondensatsammelabflussstopfen (3) mit einem Wasserablaufnetz (8) verbunden ist, das die Weiterleitung von Kondensat zu diesem letzteren ermöglicht.

5. Kondensationsstrahlungssystem nach einem der vorstehenden Ansprüche, **dadurch gekennzeichnet, dass** es ein zweites gespanntes Tuch aufweist, das an dem Ende der horizontalen Unterfläche des Kondensationsstrahlungssystems angeordnet und von dem Raum aus direkt sichtbar ist.

6. Kondensationsstrahlungssystem nach Anspruch 5,
**dadurch gekennzeichnet, dass** das zweite gespannte Tuch für Licht durchscheinend ist.

7. Kondensationsstrahlungssystem nach den Ansprüchen 5 bis 6,
**dadurch gekennzeichnet, dass** das Strahlungssystem ferner mit mindestens einer Lichtquelle ausgestattet ist, die im Inneren des Umfangsrahmens (1) zwischen dem mindestens einen dichten gespannten Tuch (2) und dem zweiten gespannten Tuch fixiert ist, wobei die Beleuchtung des Raums zugelassen wird, wobei das Licht, das durch die Lichtquelle erzeugt wird, auf das zweite gespannte Tuch verteilt wird, das sich unterhalb der Lichtquelle befindet und von dem Raum aus sichtbar ist.

8. Kondensationsstrahlungssystem nach Anspruch 5,
**dadurch gekennzeichnet, dass** das zweite gespannte Tuch mikroperforiert ist, wobei die akustische Behandlung des Raums ermöglicht wird.

9. Kondensationsstrahlungssystem nach Anspruch 5, 6 oder 8,
**dadurch gekennzeichnet, dass** das zweite gespannte Tuch eine maximale Dicke von 5 mm besitzt.

10. Vorrichtung zum Heizen und/oder Kühlen und Entfeuchten eines Gebäuderaums durch Kondensationsstrahlung, die Vorrichtung, wenn sie einmal an der Decke des Raums fixiert oder aufgehängt ist, umfassend:
einen Umfangsrahmen (1), der mit mindestens einer Linie zum Befestigen eines gespannten Tuchs (2) ausgestattet ist, das sich in dem Teil befindet, der der Decke gegenüberliegt;
eine Strahlungsplatte (4) sowie ein Befestigungsstücksatz (5), der es ermöglicht, die Strahlungsplatte (4) in den Umfangsrahmen (1) einzuführen;
mindestens ein dichtes gespanntes Tuch (2), das für die Wärmestrahlung durchlässig und mit einer Durchbohrung ausgestattet ist, wobei das mindestens eine dichte gespannte Tuch (2) von dem Raum aus sichtbar ist und die horizontale Unterfläche des Strahlungssystems ausbildet; einen Kondensatsammelabflussstopfen (3), der mit dem mindestens einen gespannten Tuch (2) auf dichte Weise fest verbunden ist und dieses letztere über die Durchbohrung durchquert;
einen durchbohrten Träger (7), **dadurch gekennzeichnet, dass** die Durchbohrung es ermöglicht, den Kondensatsammelabflussstopfen (3) aufzunehmen, wobei der durchbohrte Träger (7) an einer der Seiten des Umfangsrahmens (1) fixiert und so konfiguriert ist, dass er den Kondensatsammelabflussstopfen (3) in einer Richtung gegenüberliegend der Decke zu dem Boden des Raums zieht und so eine negative Steigung des mindestens einen dichten gespannten Tuchs (2) von dem Umfang des Rahmens (1) zu dem Kondensatsammelabflussstopfen (3) hin erzwingt.

11. Vorrichtung zum Heizen und/oder Kühlen und Entfeuchten nach Anspruch 10, **dadurch gekennzeichnet, dass** die Vorrichtung über Befestigungsaufhänger (6) an der Decke fixiert oder aufgehängt ist.

12. Vorrichtung zum Heizen und/oder Kühlen und Entfeuchten nach den Ansprüchen 10 bis 11, **dadurch gekennzeichnet, dass** der Kondensatsammelabflussstopfen (3) mit einem Wasserablaufnetz (8) verbunden ist, das die Weiterleitung von Kondensat zu diesem letzteren ermöglicht.

13. Modulare Vorrichtung zum Heizen und/oder Kühlen und Entfeuchten eines Gebäuderaums mit Kondensationsstrahlung, wobei die modulare Vorrichtung, wenn sie einmal an der Decke des Raums fixiert oder aufgehängt ist,
**dadurch gekennzeichnet ist, dass** mindestens zwei Vorrichtungen zum Heizen und/oder Kühlen und Entfeuchten gemäß einem der Ansprüche 10 bis 12 über einen Zwischenmodulanschlusssatz aneinander angefügt sind, der an den Seiten des Umfangsrahmens (1) jeder Vorrichtung zum Heizen und/oder Kühlen und Entfeuchten angeordnet ist.

## Claims

1. Condensing radiant system comprising a radiant panel (4) for heating and/or cooling and dehumidifying a building room, the condensing radiant system, once attached to or suspended from the ceiling of the room, comprises:
a peripheral frame (1) provided with at least one fastening line of a stretched fabric (2) located in the portion opposite the ceiling;
the radiant panel (4) attached to the peripheral frame (1);
at least one sealed stretched fabric (2), transparent to thermal radiation and provided with a hole, the at least one sealed stretched fabric (2) being visible from the room and forming the horizontal lower face of the radiant system; a condensate collection plug (3) rigidly connected to the at least one stretched fabric (2) so as to be sealed and passing through the fabric via the hole;
a drilled support (7), **characterized in that** the hole accommodates the condensate collection plug (3), the drilled support (7) being attached to one of the sides of the peripheral frame (1) and configured so as to pull the condensate collection plug (3) to the bottom of the room in the opposite direction to the ceiling and thus imposing a negative slope of the at least one sealed stretched fabric (2) from the periphery of the frame (1) to the condensate collection plug (3).

2. Condensing radiant system according to claim 1, **characterized in that** it further comprises a fastening part set (5) attached to the peripheral frame (1) and for inserting the radiant panel (4) into the peripheral frame (1).

3. Condensing radiant system according to claims 1 and 2, **characterized in that** the condensing radiant system is attached to or suspended from the ceiling by means of fastening hangers (6).

4. Condensing radiant system according to any of claims 1 to 3, **characterized in that** the condensate collection plug (3) is connected to a water discharge network (8) for transferring condensate to the network.

5. Condensing radiant system according to any of the preceding claims, **characterized in that** it comprises a second stretched fabric arranged at the end of the horizontal lower face of the condensing radiant system and directly visible from the room.

6. Condensing radiant system according to claim 5, **characterized in that** the second stretched fabric is translucent to light.

7. Condensing radiant system according to claims 5 to 6,
**characterized in that** the radiant system is further provided with at least one light source attached inside the peripheral frame (1) between the at least one sealed stretched fabric (2) and the second stretched fabric enabling for illuminating the room, the light generated by the light source being distributed on the second stretched fabric located below the light source and visible from the room.

8. Condensing radiant system according to claim 5, **characterized in that** the second stretched fabric is microperforated, making possible the acoustic treatment of the room.

9. Condensing radiant system according to claims 5, 6 or 8,
**characterized in that** the second stretched fabric has a maximum thickness of 5 mm.

10. Device for heating and/or cooling and dehumidifying a building room by condensing radiation, the device, once attached to or suspended from the ceiling of the room, comprising:
a peripheral frame (1) provided with at least one fastening line of a stretched fabric (2) located in the portion opposite the ceiling;
a radiant panel (4) as well as a fastening part set (5) enabling for inserting the radiant panel (4) into the peripheral frame (1);
at least one sealed stretched fabric (2), transparent to thermal radiation and provided with a hole, the at least one sealed stretched fabric (2) being visible from the room and forming the horizontal lower face of the radiant system; a condensate collection plug (3) rigidly connected to the at least one stretched fabric (2) so as to be sealed and passing through the fabric via the hole;
a drilled support (7), **characterized in that** the hole accommodates the condensate collection plug (3), the drilled support (7) being attached to one of the sides of the peripheral frame (1) and configured so as to pull the condensate collection plug (3) to the bottom of the room in the opposite direction to the ceiling and thus imposing a negative slope of the at least one sealed stretched fabric (2) from the periphery of the frame (1) to the condensate collection plug (3).

11. Heating and/or cooling and dehumidification device according to claim 10, **characterized in that** the device is attached to or suspended from the ceiling by means of fastening hangers (6).

12. Heating and/or cooling and dehumidification device according to claims 10 to 11, **characterized in that** the condensate collection plug (3) is connected to a water discharge network (8) enabling for transferring condensate to the network.

13. Modular device for heating and/or cooling and dehumidifying a building room by condensing radiation, the modular device, once attached to or suspended from the ceiling of the room, is **characterized in that** at least two heating and/or cooling and dehumidification devices according to any of claims 10 to 12 adjoin each other via an inter-module connection set arranged on the sides of the peripheral frame (1) of each heating and/or cooling and dehumidification device.
